# EUROPEAN PATENT APPLICATION

(11) **EP 4 266 475 A2**
(43) Date of publication of application: **25.10.2023**
(21) Application number: 22206955.1
(22) Date of filing: 11.11.2022
(51) Int. Cl.: H01M 50/528, H01M 50/147, H01M 50/514, H01M 50/536

(54) **BATTERY, BATTERY ASSEMBLY METHOD, AND BATTERY PACK**

(30) Priority: 18.04.2022 CN 202210404399
(71) Applicant: CALB Co., Ltd., Changzhou City, Jiangsu Province (CN)
(72) Inventor: ZHOU, Yong, Changzhou City, Jiangsu Province (CN); JIANG, Xinwei, Changzhou City, Jiangsu Province (CN)
(74) Representative: Becker, Eberhard

(57) **Abstract**

A battery includes a battery case (10), a cell (20) disposed in the battery case (10) and including a cell main body (21) and first and second tabs (21, 22) extending from opposite ends of the cell main body (21) to be connected to opposite sides of the battery case (10), and a first connecting piece (30) including first, second and third segments (31, 32, 33). Two ends of the first segment (31) are connected to the second and third segments (32, 33), respectively. The second and third segments (32, 33) are connected to the second tab (22) and the battery case (10), respectively. The first segment (31) is located between the second and third segments (32, 33), the second and third segments (32, 33) are bent on first and second sides of the first segment (31). The first and second sides are located on opposite sides.

## Description

### BACKGROUND

### Technology Field

The invention relates to the technical field of batteries, and particularly, to a battery, a battery assembly method, and a battery pack.

### Description of Related Art

In the related art, when two tabs extend out laterally, one tab is welded to one cover plate terminal. To make the welding possible on another tab and another cover plate terminal, the tab is required to be made longer, which easily leads to wrinkles, and the yield of terminal piece manufacturing is reduced.

### SUMMARY

The invention provides a battery, a battery assembly method, and a battery pack.

According to a first aspect of the invention, a battery is provided and the battery includes a battery case, a cell, and a first connecting piece. The cell is disposed in the battery case, the cell includes a cell main body, a first tab, and a second tab. The first tab and the second tab respectively extend from opposite ends of the cell main body to be respectively connected to opposite sides of the battery case. The first connecting piece includes a first segment, a second segment, and a third segment, two ends of the first segment are respectively connected to the second segment and the third segment, and the second segment and the third segment are respectively connected to the second tab and the battery case. When the third segment is pulled in a direction parallel to a lead-out direction of the second tab, at least a part of the third segment is located outside the battery case. The first segment is located between the second segment and the third segment, the second segment is bent and formed on a first side of the first segment, the third segment is bent and formed on a second side of the first segment, and the first side and the second side are respectively located on opposite sides of the first segment.

According to a second aspect of the invention, a battery assembly method is provided. The method includes the following steps. Connecting a first tab of a cell and a first cover plate assembly. Taking a second tab of the cell as an insertion end, inserting the cell into a case member from a first port of the case member, and blocking the first port by a first cover plate assembly, wherein a first connecting piece connected to the second tab is exposed at a second port of the case member, and the first port is disposed opposite to the second port. Connecting the first connecting piece and a second cover plate assembly. Blocking the second port by the second cover plate assembly blocks to bend the first connecting piece.

According to a third aspect of the invention, a battery pack is provided. The battery pack includes the abovementioned battery.

### BRIEF DESCRIPTION OF THE DRAWING

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic view of a structure of a battery according to an exemplary embodiment.
FIG. 2 is an exploded schematic view of a battery according to an exemplary embodiment.
FIG. 3 is schematic view of a part of the structure of a battery according to an exemplary embodiment.
FIG. 4 is a partial schematic view of a battery from a first perspective according to an exemplary embodiment.
FIG. 5 is a partial schematic view of a battery from a second perspective according to an exemplary embodiment.
FIG. 6 is a partial schematic view of a battery from a third perspective according to an exemplary embodiment.
FIG. 7 is a partial schematic view of a battery according to another exemplary embodiment.
FIG. 8 is another partial schematic view of a battery according to another exemplary embodiment.
FIG. 9 is a schematic view of a structure of a first connecting piece of a battery according to an exemplary embodiment.
FIG. 10 is a schematic view of a structure of a first connecting piece of a battery according to another exemplary embodiment.
FIG. 11 is a schematic view of a battery in an installed state according to another exemplary embodiment.
FIG. 12 is a schematic view of a part of a structure of a battery pack according to an exemplary embodiment.
FIG. 13 is a flowchart illustrating a battery assembly method according to an exemplary embodiment.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

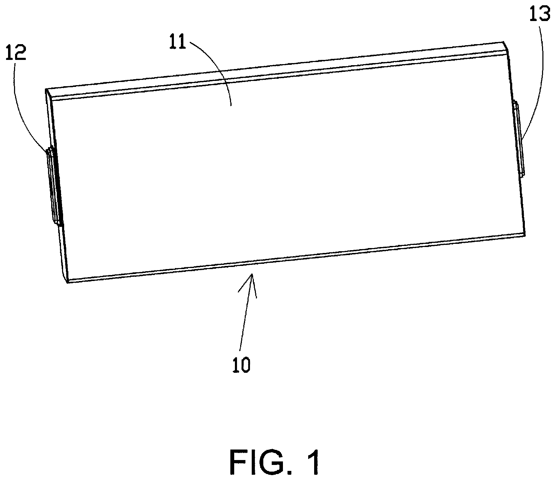

In an embodiment of the invention, a battery is provided. Referring to FIG. 1 to FIG. 11, the battery includes a battery case 10, a cell 20, and a first connecting piece 30. The cell 20 is disposed in the battery case 10. The cell 20 includes a cell main body 21, a first tab 22, and a second tab 23. The first tab 22 and the second tab 23 extend from opposite ends of the cell main body 21 to be connected to opposite sides of the battery case 10 respectively. The first connecting piece 30 includes a first segment 31, a second segment 32, and a third segment 33. Two ends of the first segment 31 are connected to the second segment 32 and the third segment 33, respectively. The second segment 32 and the third segment 33 are connected to the second tab 23 and the battery case 10, respectively. When the third segment 33 is pulled in a direction parallel to the lead-out direction of the second tab 23, at least a part of the third segment 33 is located outside the battery case 10. The first segment 31 is located between the second segment 32 and the third segment 33, the second segment 32 is bent and formed on the first side of the first segment 31, and the third segment 33 is bent and formed \ on the second side of the first segment 31. The first side and the second side are respectively located at two opposite sides of the first segment 31.

A battery according to an embodiment of the invention includes the battery case 10, the cell 20, and the first connecting piece 30. The cell 20 is disposed in the battery case 10. The first tab 22 and the second tab 23 respectively extend from opposite ends of the cell main body 21, so as to be connected respectively to opposite sides of the battery case 10. The second tab 23 is connected to the battery case 10 through the first connecting piece 30, which not only facilitates the electrical connection between the second tab 23 and the battery case 10, but also ensures the stability of the electrical connection between the second tab 23 and the battery case 10. as Also, the battery assembly is facilitated by bending the first connecting piece 30 into the first segment 31, the second segment 32 and the third segment 33, on the basis of facilitating the connection between the second tab 23 and the first connecting piece 30. Accordingly, the assembly efficiency of the battery is improved.

It is noted that, since the second tab 23 is connected to the battery case 10 through the first connecting piece 30, not so much consideration is required for the structural form of the second tab 23. For example, without excessive increase of the length of the second tab 23, the connection between the second tab 23 and the first connecting piece 30 can be quickly completed, and the total length of the second tab 23 and the first connecting piece 30 is increased to facilitate the connection with the battery case 10 in the subsequent process. After the connection is completed, the first connecting piece 30 can also be bent to form a connection in the subsequent process.

The lead-out direction of the first tab 22 can be regarded as the lead-out direction of the first tab 22 from the cell main body 21. The first tab 22 may include multiple single-piece tabs, and the first tab 22 can be formed after the plurality of single-piece tabs are folded and bent. After each of the single-piece tabs is pulled to be level, the extending direction of the single-piece tabs can be regarded as the lead-out direction of the first tab 22. Correspondingly, the lead-out direction of the second tab 23 can be regarded as the lead-out direction of the second tab 23 from the cell main body 21. The second tab 23 may include multiple single-piece tabs, and the second tab 23 may be formed after the plurality of single-piece tabs are folded and bent. After each of the single-piece tabs is pulled to be level, the extending direction of the single-piece tabs can be regarded as the lead-out direction of the second tab 23.

When the third segment 33 is pulled to be level in a direction parallel to the lead-out direction of the second tab 23, at least a part of the third segment 33 is located outside the battery case 10, that is, the third segment 33 can be disposed beyond a second port 112 of a case member 11, so as to facilitate the connection between a second cover plate assembly 13 and the third segment 33, and after the connection between the second cover plate assembly 13 and the third segment 33 is completed, the third segment 33 and the first segment 31 can be bent. When the third segment 33 is pulled to be level in a direction parallel to the lead-out direction of the second tab 23, at least a part of the third segment 33 is located outside the battery case 10, and therefore without excessive increase of the length of the second tab 23, the length can be increased through the first connecting piece 30 to facilitate the connection between the third segment 33 and the battery case 10 in the subsequent process.

When the first segment 31 is pulled to be level in a direction parallel to the lead-out direction of the second tab 23, at least a part of the first segment 31 is located outside the battery case 10, that is, the first segment 31 may be relatively long, and therefore the connection between the third segment 33 and the second cover plate assembly 13 can be facilitated. The length of the third segment 33 may also be shorter than the length of the first segment 31, so that much space taken up by the third segment 33 is prevented.

A battery includes a cell and an electrolyte, and the battery is the smallest unit capable of performing electrochemical reactions such as charge/discharge. The cell refers to a unit formed by winding or laminating a stack portion, and the stack portion includes a first electrode, a separator, and a second electrode. When the first electrode is a positive electrode, the second electrode is a negative electrode. The polarities of the first electrode and the second electrode can be interchanged.

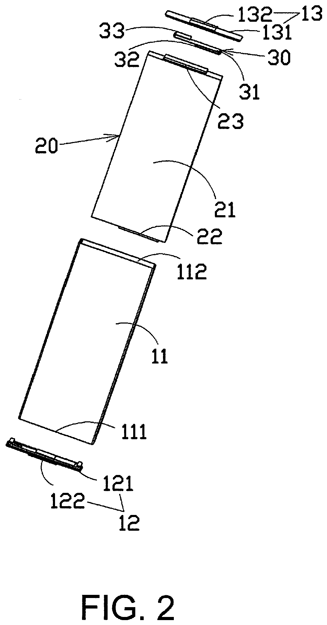

In one embodiment, as shown in FIG. 1 and FIG. 2, the battery case 10 includes the case member 11, a first cover plate assembly 12, and the second cover plate assembly 13. The case member 11 includes a first port 111 and the second port 112 disposed oppositely. The first cover plate assembly 12 is connected to the first port 111. The second cover plate assembly 13 is connected to the second port 112. The first tab 22 and the second tab 23 are connected to the first cover plate assembly 12 and the second cover plate assembly 13, respectively. The second tab 23 is connected to the second cover plate assembly 13 through the first connecting piece 30, and therefore after the connection among the second tab 23, the first connecting piece 30, and the second cover plate assembly 13 is completed, the first connecting piece 30 can be bent in the process of connecting the second cover plate assembly 13 to the case member 11, so that the configuration efficiency of the battery is improved.

The first tab 22 of the cell 20 can be first connected to the first cover plate assembly 12, that is, the first tab 22 is electrically connected to the first cover plate assembly 12, and the second tab 23 of the cell 20 is served as an insertion end. The cell 20 is inserted into the case member 11 from the first port 111 of the case member 11, and the first cover plate assembly 12 blocks the first port 111. Meanwhile, the first connecting piece 30 connected to the second tab 23 is exposed on the second port 112 of the case member 11, and therefore the connection between the first connecting piece 30 and the second cover plate assembly 13 can be facilitated, and after the connection between the first connecting piece 30 and the second cover plate assembly 13 is completed, the second cover plate assembly 13 can block the second port 112. In the process, the first connecting piece 30 is bent, that is, the first connecting piece 30 is bent into the first segment 31, the second segment 32 and the third segment 33. The first segment 31 is located between the second segment 32 and the third segment 33, the second segment 32 is formed by bending on the first side of the first segment 31, and the third segment 33 is formed by bending on the second side of the first segment 31.

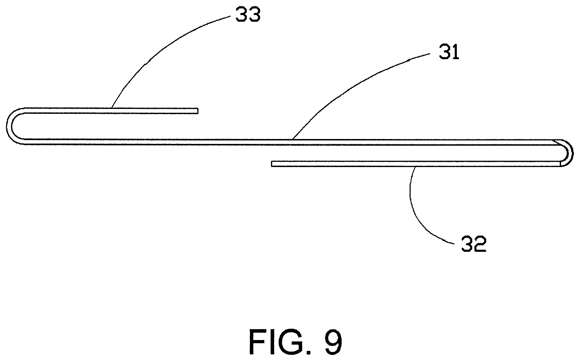

It is noted that, the first side and the second side are respectively located on opposite sides of the first segment 31, and the opposite sides of the first segment 31 do not include the opposite ends of the first segment 31 respectively connected to the second segment 32 and the third segment 33, but refer specifically to the two sides corresponding to the two opposite larger areas of the first segment 31. With respect to FIG. 9, the opposite sides of the first segment 31 can be regarded as the upper and lower sides of the first segment 31. This design facilitates the bending and formation of the first connecting piece 30, and the first connecting piece 30 is disposed in the battery case 10 without taking up too much space in the battery.

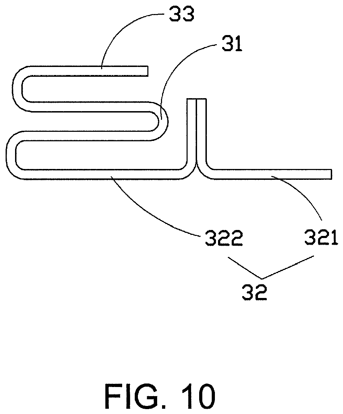

It is noted that the first segment 31 may be a segment body. For example, the first segment 31 may be a flat plate segment, as shown in FIG. 9. Alternatively, the first segment 31 may include multiple segment bodies. For example, the first segment 31 may have a U-shaped structure, as illustrated in FIG. 10. The first segment 31 may also be an S-shaped structure, which is not limited to the invention.

In one embodiment, as shown in FIG. 2, the first cover plate assembly 12 includes a first cover plate 121 and a first terminal 122. The first terminal 122 is disposed on the first cover plate 121, and the first tab 22 is connected to the first terminal 122. The second cover plate assembly 13 includes a second cover plate 131 and a second terminal 132, the second terminal 132 is disposed on the second cover plate 131, the second tab 23 is connected to the second terminal 132, and therefore the first terminal 122 and the second terminal 132 can be served as two electrode lead-out ends of the battery, which facilitates the charging and discharging of the battery.

The first terminal 122 is insulated from the first cover plate 121, and the second terminal 132 is insulated from the second cover plate 131.

In some embodiments, the first tab 22 may be directly connected to the first terminal 122, and the first tab 22 and the first terminal 122 may be welded together.

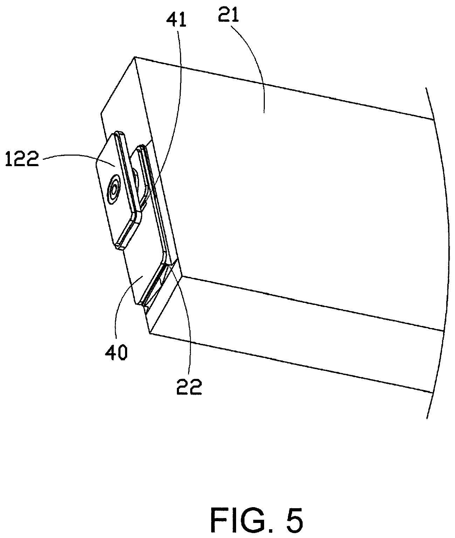

In some embodiments, the battery further includes a second connecting piece 40, and the first tab 22 is connected to the first cover plate assembly 12 through the second connecting piece 40, and therefore the connection between the first tab 22 and the first cover plate assembly 12 can be facilitated, so as to meet the configuration position requirements of the first tab 22 and the first cover plate assembly 12. The first tab 22 is connected to the first terminal 122 of the first cover plate assembly 12 through the second connecting piece 40, as shown in FIG. 5.

In some embodiments, the first terminal 122 of the first cover plate assembly 12 can be eliminated, the first tab 22 can be electrically connected to the first cover plate 121. The second cover plate assembly 13 can include the second terminal 132, and the second tab 23 is electrically connected to the second terminal 132. Alternatively, the first terminal 122 of the first cover plate assembly 12 can be eliminated, the second terminal 132 of the second cover plate assembly 13 can be eliminated, the first tab 22 can be electrically connected to the first cover plate 121, and the second tab 23 can be electrically connected to the second cover plate 131. Meanwhile, the first cover plate assembly 12 and the case member 11 may be disposed in an insulating manner, and the second cover plate assembly 13 and the case member 11 may be disposed in an insulating manner. Alternatively, the first cover plate assembly 12 may include the first terminal 122, and the second terminal 132 of the second cover plate assembly 13 may be eliminated.

In one embodiment, the larger area of the second segment 32 is disposed opposite to the first segment 31, and the larger area of the third segment 33 is disposed opposite to the first segment 31, so that large space taken up by the first connecting piece 30 inside the battery is prevented, and the first connecting piece 30 is configured in a reasonable manner.

In one embodiment, the larger area of the second segment 32 is slightly parallel to the larger area of the third segment 33, so that the height of the first connecting piece 30 can be relatively small, thereby reducing the space taken up by the first connecting piece 30 inside the battery.

It is noted that, the larger area of the second segment 32 is the surface with the largest area of the second segment 32, the upper and lower surfaces of the second segment 32 are both larger areas of the second segment 32, the larger area of the third segment 33 is the surface with the largest area of the third segment 33, the upper and lower surfaces of the third segment 33 are both the larger areas of the third segment 33, and the two opposite surfaces of the first segment 31 are the two larger areas of the first segment 31. As such, the larger area of the second segment 32 may be slightly parallel to one larger area of the first segment 31, and the larger area of the third segment 33 may be slightly parallel to another larger area of the first segment 31. Herein, the slightly parallel refers to that the larger area of the second segment 32 is parallel to the larger area of the third segment 33 when the manufacturing accuracy and configuration accuracy are ignored.

In one embodiment, at least a part of the second segment 32 and the first segment 31 are an integrated structure, which not only has a simple structure but also ensures the structural strength of the first segment 31 and the second segment 32.

At least a part of the third segment 33 and the first segment 31 are an integrated structure, which not only has a simple structure but also ensures the structural strength of the third segment 33 and the first segment 31.

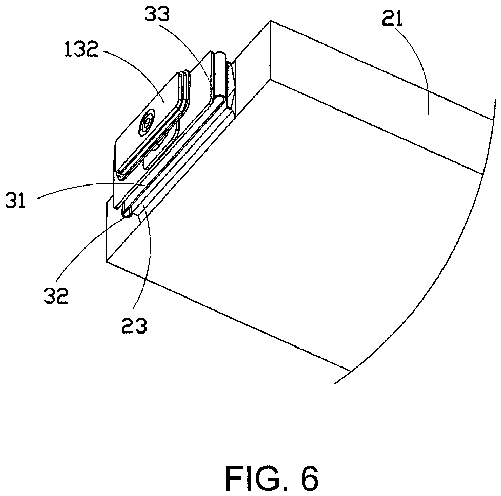

In one embodiment, as shown in FIG. 6, the larger area of the second tab 23 is disposed opposite to the end of the cell main body 21, and at least a part of the second segment 32 is connected to the larger area of the second tab 23 facing the end of the cell main body 21, so that damage to the cell main body 21 can be prevented in the process of connecting the second tab 23 and the second segment 32.

The second tab 23 and the second segment 32 can be welded. For example, the second tab 23 and the second segment 32 can be welded by laser. The second segment 32 is located inside the second tab 23, such that the laser is prevented from penetrating into the battery, and that the damage to the cell main body 21 is prevented.

It is noted that, the first tab 22 and the second tab 23 respectively extend from opposite ends of the cell main body 21, the lead-out directions of the first tab 22 and the second tab 23 are perpendicular to the end portions of the cell main body 21, the second tab 23 is required to be folded and then bent, and therefore the larger area of the second tab 23 can be disposed opposite to the end portion of the cell main body 21. The second segment 32 is inserted into the inner side of the second tab 23, so that the laser is prevented from penetrating into the inside of the battery, and that the damage to the cell main body 21 is prevented.

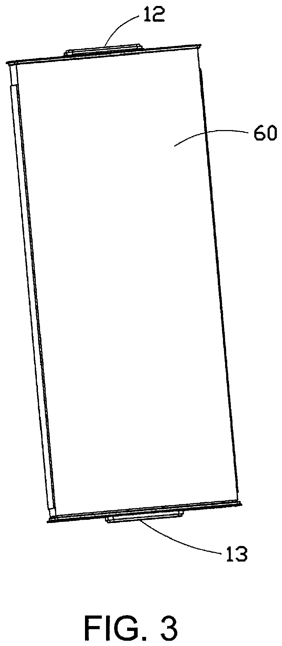

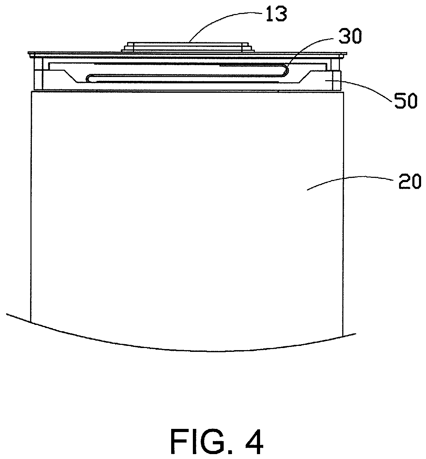

In one embodiment, as shown in FIG. 3 and FIG. 4, the battery further includes a holder 50 and a protective film 60. The holder 50 is disposed at the end of the cell main body 21 having the second tab 23. The protective film 60 covers the cell main body 21, and the protective film 60 is fixedly connected to the holder 50. For example, the protective film 60 is welded and fixed to the holder 50, and therefore the holder 50 can be stably disposed in the case member 11, and the cell main body 21 can be ensured to stably disposed in the case member 11.

The holder 50 may be an insulating structure, and the protective film 60 may be a mylar film. After the second tab 23 is connected to the first connecting piece 30 by welding, the end of the cell main body 21 with the second tab 23 is welded to the holder 50, the holder 50 is welded and fixed to the mylar film, and one end of the cell main body 21 connected to the holder 50 may be inserted into the case member 11 first in the subsequent process.

It is noted that a holder may also be disposed on the side of the cell main body 21 having the first tab 22, and the invention is not limited thereto.

In one embodiment, as shown in FIG. 5, the second connecting piece 40 is formed with a fusing portion 41, so that after the current reaches a certain value, the second connecting piece 40 can be disconnected at the position of the fusing portion 41, as such, the electrical connection between the first tab 22 and the first cover plate assembly 12 is disconnected. The fusing portion 41 may be a through hole.

In one embodiment, the first tab 22 is a positive tab, the second tab 23 is a negative tab, the positive tab is connected to the first cover plate assembly 12 through the second connecting piece 40, and the negative tab is connected to the second cover plate assembly 13 through the first connecting piece 30.

In one embodiment, as shown in FIG. 5 and FIG. 6, the cell 20 may include a first cell and a second cell, and the first cell and the second cell are disposed side by side. One tab portion of the first cell and one tab portion of the second cell form the first tab 22, and another tab portion of the first cell and another tab portion of the second cell form the second tab 23. The second segment 32 is an integrated structure, and the second segment 32 is connected to both the tab portion of the first cell and the tab portion of the second cell. The first cell and the second cell are combined to form the cell 20, and this configuration can facilitate the manufacturing process. The manufacturing process of forming a thick cell is relatively difficult, so with the configuration of the first cell and the second cell disposed side by side to form the cell 20, the cell 20 is ensured to have sufficient energy density to meet the use requirements. Also, the structure of the first connecting piece 30 is simplified with the integrally formed second segment 32 connected to both the tab portion of the first cell and the tab portion of the second cell.

As shown in FIG. 9, the first connecting piece 30 can be an integrated structure, that is, the first segment 31, the second segment 32 and the third segment 33 are an integrated structure, which not only is simple in structure but also can ensure the structural strength.

Both the tab portion of the first cell and the tab portion of the second cell can be welded on the second connecting piece 40, and the tab portion of the first cell and the tab portion of the second cell can be connected to the second connecting piece 40 by butterfly welding. Then, the first cell and the second cell can be combined to form the cell 20, the cell 20 can be inserted into the case member 11 in the subsequence process, and both the tab portion of the first cell and the tab portion of the second cell can be welded to the second segment 32.

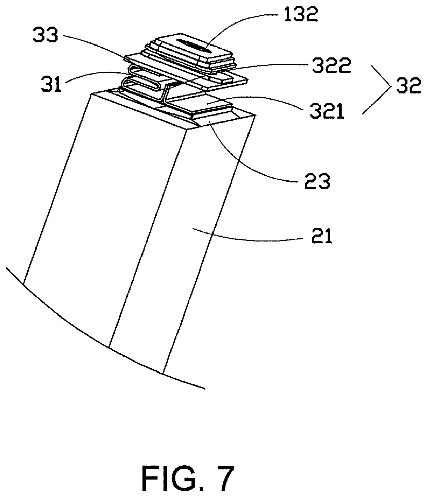

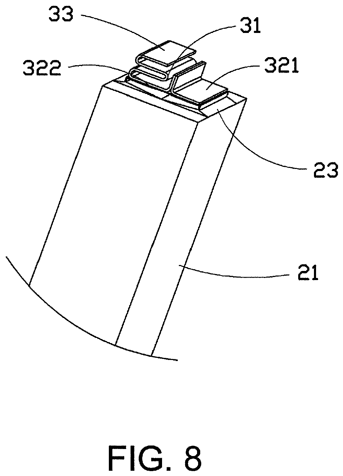

In one embodiment, as shown in FIG. 7 and FIG. 8, the cell 20 may include a first cell and a second cell, and the first cell and the second cell are disposed side by side. One tab portion of the first cell and one tab portion of the second cell form the first tab 22, and another tab portion of the first cell and another tab portion of the second cell form the second tab 23. The second segment 32 includes a first split member 321 and a second split member 322 connected to each other. The first split member 321 and the second split member 322 are two independent members. The first split member 321 is connected to the tab portion of the first cell, the second split member 322 is connected to the tab portion of the second cell, and the first segment 31 is connected to the first split member 321. The first split member 321 and the second split member 322 can be independently welded to the tab portion of the first cell and the tab portion of the second cell, thereby reducing the difficulty of welding, improving the efficiency of assembly, and simplifying the auxiliary structures required in the welding process.

The first split member 321 and the tab portion of the first cell can be welded, the second split member 322 and the tab portion of the second cell can be welded, and then the first split member 321 and the second split member 322 are welded, thereby implementing the connection between the second tab 23 and the first connecting piece 30. The third segment 33 of the first connecting piece 30 can be connected to the second cover plate assembly 13 in the subsequent process, and the bending of the first connecting piece 30 can be implemented in the process of connecting the second cover plate assembly 13 and the case member 11 in the subsequent process.

As shown in FIG. 10, the first split member 321 is substantially an L-shaped structure, the second split member 322 is substantially an L-shaped structure, and the first split member 321, the first segment 31, and the third segment 33 are an integrated structure.

It is noted that the cell 20 may include a first cell and a second cell, the first cell and the second cell are disposed side by side, and the first cell and the second cell may be cells with a consistent structure, or the first cell and the second cell may be cells with different structures, which are not limited to the invention. The structures of the first cell and the second cell are also not limited to the invention.

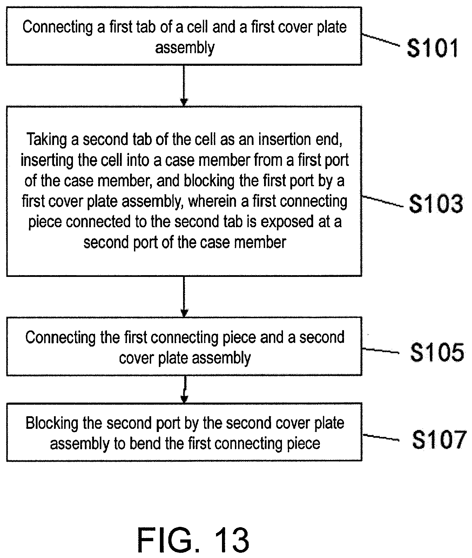

An embodiment of the invention also provides a battery assembly method. Referring to FIG. 13, the battery assembly method includes steps as follows.

In S101, the first tab 22 of the cell 20 is connected to the first cover plate assembly 12.

In S103, the second tab 23 of the cell 20 is served as an insertion end, and the cell 20 is inserted into the case member 11 from the first port 111 of the case member 11, and the first cover plate assembly 12 blocks the first port 111. The first connecting piece 30 connected to the second tab 23 is exposed to the second port 112 of the case member 11, and the first port 111 and the second port 112 are disposed opposite to each other.

In S105, the first connecting piece 30 is connected to the second cover plate assembly 13.

In S107, the second cover plate assembly 13 blocks the second port 112 to bend the first connecting piece 30.

In the battery assembly method according to an embodiment of the invention, the first tab 22 of the cell 20 is connected to the first cover plate assembly 12, the second tab 23 of the cell 20 serving as an insertion end is disposed in the case member 11, and the first connecting piece 30 connected to the second tab 23 is exposed on the second port 112 of the case member 11. Therefore, the connection between the first connecting piece 30 and the second cover plate assembly 13 can be facilitated, and the first connecting piece 30 is bent in the process in which the second cover plate assembly 13 blocks the second port 112, as such, on the basis of facilitating the connection between the second tab 23 and the first connecting piece 30, the assembly of the battery is also facilitated. Accordingly, the assembly efficiency of the battery is improved.

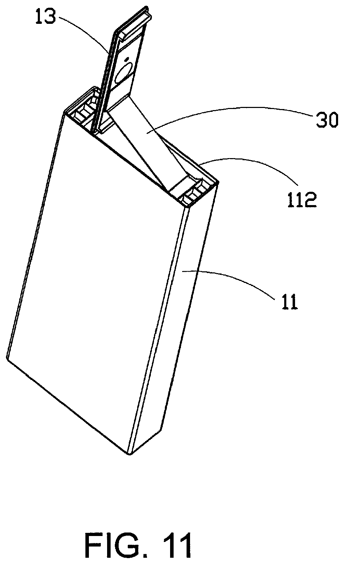

It is noted that as shown in FIG. 11, the second tab 23 of the cell 20 is served as the insertion end, that is, the second tab 23 of the cell 20 is inserted into the case member 11 through the first port 111, and the first connecting piece 30 connected to the second tab 23 is exposed to the second port 112 of the case member 11, so as to facilitate the connection between the first connecting piece 30 and the second cover plate assembly 13 in the subsequent process. Meanwhile, the length of the second tab 23 may not be too long to prevent problems, such as wrinkles and the like.

In the process in which the second cover plate assembly 13 blocks the second port 112, the first connecting piece 30 exposed on the second port 112 of the case member 11 is bent, thereby ensuring that the second cover plate assembly 13 and the case member 11 form a sealed connection. Moreover, the entire assembly process can facilitate the connection between the first connecting piece 30 and the second cover plate assembly 13 without affecting the connection between the second cover plate assembly 13 and the case member 11.

In one embodiment, the battery assembly method further includes steps as follows. Before inserting the cell 20 into the case member 11 from the first port 111 of the case member 11, the second tab 23 is connected to the first connecting piece 30, so that the connection between the second tab 23 and the first connecting piece 30 is prevented from being affected by the case member 11, and therefore the connection efficiency between the second tab 23 and the first connecting piece 30 is improved.

The second tab 23 and the first connecting piece 30 can be welded. Before the cell 20 is inserted into the case member 11 from the first port 111 of the case member 11, the second tab 23 and the firs connecting piece 30 are welded, such that the welding of the second tab 23 and the first connecting piece 30 can be facilitated, thereby improving the assembly efficiency of the battery, and the length of the second tab 23 can be relatively small. After all, the first connecting piece 30 increases the connection length between the first connecting piece 30 and the second cover plate assembly 13 in the subsequent process, thereby facilitating the connection between the first connecting piece 30 and the second cover plate assembly 13.

It is noted that the first tab 22 of the cell 20 can be first connected to the first cover plate assembly 12, that is, the first tab 22 and the first cover plate assembly 12 are electrically connected, the second tab 23 of the cell 20 is served as the insertion end, the cell 20 is inserted into the case member 11 from the first port 111 of the case member 11, and the first cover plate assembly 12 blocks the first port 111. Meanwhile, the first connecting piece 30 connected to the second tab 23 is exposed on the second port 112 of the case member 11, so that the connection between the first connecting piece 30 and the second cover plate assembly 13 can be facilitated, and after the connection between the first connecting piece 30 and the second cover plate assembly 13 is completed, the second cover plate assembly 13 can block the second port 112, in this process, the first connecting piece 30 is bent, that is, the first connecting piece 30 is bent into the first segment 31, the second segment 32, and the third segment 33. Moreover, the first segment 31 is located between the second segment 32 and the third segment 33, the second segment 32 is formed by bending on the first side of the first segment 31, the third segment 33 is bent and formed on the second side of the first segment 31.

In one embodiment, the step of connecting the second tab 23 to the first connecting piece 30 includes steps as follows. The second tab 23 is bent, so that the larger area of the second tab 23 is disposed opposite to the end portion of the cell main body 21. The first connecting piece 30 is disposed on the larger area of the second tab 23 facing the end of the cell main body 21. The first connecting piece 30 and the second tab 23 are welded, and a part of the first connecting piece 30 is exposed on the outside of the second tab 23, so as to facilitate the connection between the first connecting piece 30 and the second cover plate assembly 13 in the subsequent process. The first connecting piece 30 is disposed on the larger area of the second tab 23 facing the end of the cell main body 21, and this configuration can prevent damage to the cell main body 21 in the welding process of the second tab 23 and the first connecting piece 30.

In one embodiment, the first connecting piece 30 exposed on the outside of the second tab 23 is bent, and the first connecting piece 30 and the second tab 23 are disposed opposite to each other, so as to facilitate the connection between the first connecting piece 30 and the second cover plate assembly 13 in the subsequent process.

Before the second tab 23 is inserted into the case member 11, the first connecting piece 30 has already connected to the second tab 23, so it only requires to prevent the interference between the first connecting piece 30 and the case member 11 in the process of inserting the first connecting piece 30 into the case member 11. After the first connecting piece 30 is exposed on the second port 112, the connection between the first connecting piece 30 and the second cover plate assembly 13 can be facilitated. The first connecting piece 30 exposed on the outside of the second tab 23 is bent, and the first connecting piece 30 is disposed opposite to the second tab 23, either before the first connecting piece 30 is inserted into the case member 11 or after the first connecting piece 30 is inserted into the case member 11, the invention is not limited thereto, as long as it is ensured that no interference happens between the first connecting piece 30 and the case member 11, and the connection between the first connecting piece 30 and the second cover plate assembly 13 is facilitated in the subsequent process.

In one embodiment, before the first connecting piece 30 is connected to the second cover plate assembly 13, the first connecting piece 30 exposed on the outside of the second tab 23 is bent, and the first connecting piece 30 is disposed opposite to the second tab 23. The first connecting piece 30 is formed with at least two folds, thereby facilitating the connection between the first connecting piece 30 and the second cover plate assembly 13 in the subsequent process.

In one embodiment, in the process in which the second cover plate assembly 13 blocks the second port 112, the first connecting piece 30 is bent along the folds of the first connecting piece 30, thereby facilitating the bending of the first connecting piece 30 and ensuring that the first connecting piece 30 has a high-precision bending position.

Since the first connecting piece 30 is formed with at least two folds before the first connecting piece 30 is connected to the second cover plate assembly 13, the bending of the first connecting piece 30 can be facilitated in the subsequent process of connecting the second cover plate assembly 13 and the case member 11, and it can be ensured that the first connecting piece 30 has a high-precision bending position.

In one embodiment, the step of connecting the first connecting piece 30 to the second cover plate assembly 13 includes steps as follows. A certain angle is formed between the second cover plate assembly 13 and the plane where the second port 112 is located. The first connecting piece 30 and the second cover plate assembly 13 are welded. When the first connecting piece 30 and the second cover plate assembly 13 are welded, a certain distance should be left between the welding head and the welding place, and a certain angle is formed between the second cover plate assembly 13 and the plane where the second port 112 is located, such that a reliable welding gap can be provided. Accordingly, the connection between the first connecting piece 30 and the second cover plate assembly 13 is facilitated, and the length of the first connecting piece 30 is not too long, so as to facilitate the bending of the first connecting piece 30 in the subsequent process.

In one embodiment, as shown in FIG. 11, the second cover plate assembly 13 is substantially perpendicular to the plane where the second port is located, such that sufficient welding space can be provided for welding the first connecting piece 30 and the second cover plate assembly 13 in the subsequent process, which facilitates the welding of the first connecting piece 30 and the second cover plate assembly 13, and it is convenient for the welding tool to clamp the second cover plate assembly 13, the risk of welding residue falling inside the battery is reduced, and a the bending of the first connecting piece 30 in the subsequent process is also facilitated.

Before the first connecting piece 30 is connected to the second cover plate assembly 13, a portion of the first connecting piece 30 is disposed opposite to the second tab 23, and the portion of the first connecting piece 30 may be substantially perpendicular to the plane where the second port 112 is located. After the second cover plate assembly 13 is disposed substantially perpendicular to the plane where the second port 112 is located, the portion of the first connecting piece 30 can be reliably bonded to the second cover plate assembly 13 to facilitate the welding in the subsequent process, and after the welding is completed, the first connecting piece 30 can be bent according to the positions of the folds.

In one embodiment, the step of connecting the first tab 22 of the cell 20 to the first cover plate assembly 12 includes steps as follows. The second connecting piece 40 is connected to the first cover plate assembly 12, and the second connecting piece 40 is connected to the first tab 22. The connection between the first tab 22 and the first cover plate assembly 12 through the second connecting piece 40, this can not only ensure the overcurrent capability between the first tab 22 and the first cover plate assembly 12 but also improve the connection strength.

The first tab 22 can be connected to the first terminal 122 of the first cover plate assembly 12 through the second connecting piece 40, and the second tab 23 can be connected to the second terminal 132 of the second cover plate assembly 13 through the first connecting piece 30.

In some embodiments, it is possible that the first tab 22 can be directly connected to the first cover plate assembly 12.

In one embodiment, the second connecting piece 40 is formed with the fusing portion 41, so that after the current reaches a certain value, the second connecting piece 40 can be disconnected at the position of the fusing portion 41, such that the electrical connection between the second tab 23 and the second cover plate assembly 13 is disconnected.

Considering that the second connecting piece 40 is formed with the fusing portion 41, the welding area of the second connecting piece 40 is relatively small, so it is not easy to perform welding. In the embodiment, the second connecting piece 40 having the fusing portion 41, the first tab 22, and the first cover plate assembly 12 are welded first, so the second connecting piece 40 can be accurately welded in place.

In one implementation, the first tab 22 is a positive tab, the second tab 23 is a negative tab, and the positive tab has the fusing portion 41. The connection of the positive tab is performed first, and the connection of the negative tab is performed subsequently, such that the reliability of welding is ensured. It is not excluded that the first tab 22 is a negative tab, and the first tab 22 is a positive tab, the invention is not limited thereto.

In one embodiment, after the second tab 23 is connected to the first connecting piece 30, the holder 50 is disposed at one end of the cell main body 21 having the second tab 23, the protective film 60 covering the cell main body 21 is fixedly connected to the holder 50, and then the cell main body 21 is inserted into the case member 11 from one end having the holder 50.

In one embodiment, the cell 20 is formed by the first cell and the second cell, to facilitate the manufacturing process, that is, the manufacturing process of forming a thick cell is relatively difficult, and with the configuration of the first cell and the second cell disposed side by side to form the cell 20, the cell 20 is ensured to have sufficient energy density to meet the use requirements.

The first connecting piece 30 is an integrated structure, and the first connecting piece 30 is connected to both the tab portion of the first cell and the tab portion of the second cell, such that the structure of the first connecting piece 30 can be simplified.

The first connecting piece 30 can be an integrated structure, which not only has a simple structure but also can ensure structural strength. Both the tab portion of the first cell and the tab portion of the second cell can be welded on the second connecting piece 40, the tab portion of the first cell and the tab portion of the second cell can be connected to the second connecting piece 40 by butterfly welding, and then the first cell and the second cell can be combined to form the cell 20, and the cell 20 is subsequently inserted into the case member 11, and both the tab portion of the first cell and the tab portion of the second cell can be simultaneously welded to the first connecting piece 30.

The first connecting piece 30 includes the first split member 321 and the second split member 322, which are two independent members. The first split member 321 is connected to the tab portion of the first cell, the second split member 322 is connected to the tab portion of the second cell, and the first split member 321 is connected to the second split member 322.

The first split member 321 and the second split member 322 can be independently welded to the tab portion of the first cell and the tab portion of the second cell, thereby reducing the difficulty of welding, improving the efficiency of assembly, and simplifying the auxiliary structures required in the welding process.

Both the tab portion of the first cell and the tab portion of the second cell can be welded on the second connecting piece 40, the tab portion of the first cell and the tab portion of the second cell can be connected to the second connecting piece 40 by butterfly welding, and then the first cell and the second cell can be combined to form the cell 20. The first split member 321 and the tab portion of the first cell can be welded, the second split member 322 and the tab portion of the second cell can be welded, and then the first split member 321 and the second split member 322 are welded to implement the connection between the second tab 23 and the first connecting piece 30. The first connecting piece 30 can be connected to the second cover plate assembly 13 in the subsequent process, and subsequently, the bending of the first connecting piece 30 can be implemented in the process of connecting the second cover plate assembly 13 and the case member 11.

An embodiment of the invention further provides a battery pack, and the battery pack includes the abovementioned battery.

A battery pack according to an embodiment of the invention includes the battery. The battery includes the battery case 10, the cell 20, and the first connecting piece 30, and the cell 20 is disposed in the battery case 10. The first tab 22 and the second tab 23 extend from opposite ends of the cell main body 21, respectively, to be connected to opposite sides of the battery case 10, respectively. The second tab 23 is connected to the battery case 10 through the first connecting piece 30, which not only facilitates the electrical connection between the second tab 23 and the battery case 10 but also can ensure the stability of the electrical connection between the second tab 23 and the battery case 10. Also, by bending the first connecting piece 30 into the first segment 31, the second segment 32 and the third segment 33, the assembly of the battery can also be facilitated on the basis of facilitating the connection between the second tab 23 and the first connecting piece 30, thereby improving the assembly efficiency of the battery.

In one embodiment, the battery pack is a battery module or a battery pack.

The battery module includes multiple batteries, the battery module may further include an end plate and a side plate, and the end plate and the side plate are configured to fix the multiple batteries.

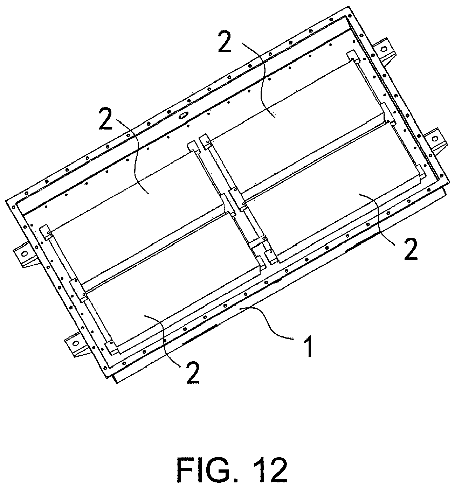

As shown in FIG. 12, the batteries can be formed into a battery module 2 and then be disposed in a battery case 1, and the batteries can be fixed by the end plate and the side plate. The batteries can be directly disposed in the battery case, that is, grouping the batteries is not required, and meanwhile the end plate and the side plate can be removed.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure. The specification and embodiments are illustrative.

## Claims

1. A battery, comprising:
a battery case (10);
a cell (20), wherein the cell (20) is disposed in the battery case (10), the cell (20) comprises a cell main body (21), a first tab (22), and a second tab (23), the first tab (22) and the second tab (23) respectively extend from opposite ends of the cell main body (21) to be respectively connected to opposite sides of the battery case (10); and
a first connecting piece (30), wherein the first connecting piece (30) comprises a first segment (31), a second segment (32), and a third segment (33), two ends of the first segment (31) are respectively connected to the second segment (32) and the third segment (33), the second segment (32) and the third segment (33) are respectively connected to the second tab (23) and the battery case (10), and when the third segment (33) is pulled to be level in a direction parallel to a lead-out direction of the second tab (23), at least a part of the third segment (33) is located outside the battery case (10);
wherein the first segment (31) is located between the second segment (32) and the third segment (33), the second segment (32) is bent and formed on a first side of the first segment (31), the third segment (33) is bent and formed on a second side of the first segment (31), and the first side and the second side are respectively located on opposite sides of the first segment (31).

2. The battery according to claim 1, wherein a larger area of the second segment (32) is disposed opposite to the first segment (31), and a larger area of the third segment (33) is disposed opposite to the first segment (31).

3. The battery according to claim 2, wherein the larger area of the second segment (32) is slightly parallel to the larger area of the third segment (33).

4. The battery according to claim 1, wherein at least a part of the second segment (32) and the first segment (31) are an integrated structure; and
the at least a part of the third segment (33) and the first segment (31) are an integrated structure.

5. The battery according to claim 1, wherein a larger area of the second tab (23) is disposed opposite to an end of the cell main body (21), and at least a part of the second segment (32) is connected to the larger area of the second tab (23) facing the end of the cell main body (21).

6. The battery according to claim 1, wherein the battery case (10) comprises:
a case member (11), wherein the case member (11) comprises a first port (111) and a second port (112) disposed opposite to each other;
a first cover plate assembly (12), wherein the first cover plate assembly (12) is connected to the first port (111); and
a second cover plate assembly (13), wherein the second cover plate assembly (13) is connected to the second port (112);
wherein the first tab (22) and the second tab (23) are respectively connected to the first cover plate assembly (12) and the second cover plate assembly (13).

7. The battery according to claim 6, wherein the first cover plate assembly (12) comprises a first cover plate (121) and a first terminal (122), the first terminal (122) is disposed on the first cover plate (121), and the first tab (22) is connected to the first terminal (122); and
the second cover plate assembly (13) comprises a second cover plate (131) and a second terminal (132), the second terminal (132) is disposed on the second cover plate (131), and the second tab (23) is connected to the second terminal (132).

8. The battery according to claim 7, further comprising a second connecting piece (40), and the first tab (22) is connected to the second cover plate assembly (13) through the second connecting piece (40).

9. The battery according to any one of claims 1-8, wherein when the first segment (31) is pulled to be level in the direction parallel to the lead-out direction of the second tab (23), at least a part of the first segment (31) is located outside the battery case (10).

10. The battery according to claim 1, wherein the cell (20) comprises a first cell and a second cell, the first cell and the second cell are disposed side by side, one tab portion of the first cell and one tab portion of the second cell form the first tab (22), and another tab portion of the first cell and another tab portion of the second cell form the second tab (23); and
the second segment (32) is an integrated structure, and the second segment (32) is connected to both the tab portion of the first cell and the tab portion of the second cell.

11. The battery according to any one of claims 1-8, wherein the cell (20) comprises a first cell and a second cell, the first cell and the second cell are disposed side by side, one tab portion of the first cell and one tab portion of the second cell form the first tab (22), and another tab portion of the first cell and another tab portion of the second cell form the second tab (23); and
the second segment (32) comprises a first split member (321) and a second split member (322) that are connected to each other, the first split member (321) and the second split member (322) are two independent members, the first split member (321) is connected to the tab portion of the first cell, the second split member (322) is connected to the tab portion of the second cell, and the first segment (31) is connected to the first split member (321).

12. A battery assembly method, comprising the following steps:
connecting a first tab (22) of a cell (20) and a first cover plate assembly (12);
taking a second tab (23) of the cell (20) as an insertion end, inserting the cell (20) into a case member (11) from a first port (111) of the case member (11), and blocking the first port (111) by a first cover plate assembly (12), wherein a first connecting piece (30) connected to the second tab (23) is exposed at a second port (112) of the case member (11), and the first port (111) is disposed opposite to the second port (112);
connecting the first connecting piece (30) and a second cover plate assembly (13); and
blocking the second port (112) by the second cover plate assembly (13) to bend the first connecting piece (30).

13. The battery assembly method according to claim 12, further comprising:
before the cell (20) is inserted into the case member (11) from the first port (111) of the case member (11), connecting the second tab (23) and the first connecting piece (30).

14. The battery assembly method according to claim 13, wherein the step of connecting the second tab (23) and the first connecting piece (30) comprises:
bending the second tab (23), so that a larger area of the second tab (23) is disposed opposite to an end portion of a cell main body (21);
disposing the first connecting piece (30) on the larger area of the second tab (23) facing the end portion of the cell main body (21); and
welding the first connecting piece (30) and the second tab (23), so that a part of the first connecting piece (30) is exposed outside the second tab (23).

15. The battery assembly method according to claim 14, wherein the first connecting piece (30) exposed outside the second tab (23) is bent, and the first connecting piece (30) is disposed opposite to the second tab (23).

16. The battery assembly method according to claim 15, wherein before the first connecting piece (30) is connected to the second cover plate assembly (13), the first connecting piece (30) exposed outside the second tab (23) is bent, and the first connecting piece (30) is disposed opposite to the second tab (23);
wherein the first connecting piece (30) is formed with at least two folds.

17. The battery assembly method according to claim 16, wherein in the step of blocking the second port (112) by the second cover plate assembly (13), the first connecting piece (30) is bent along the folds of the first connecting piece (30).

18. The battery assembly method according to any one of claims 12-17, wherein the step of connecting the first connecting piece (30) and the second cover plate assembly (13) comprises:
forming a certain angle between the second cover plate assembly (13) and a plane where the second port (112) is located; and
welding the first connecting piece (30) and the second cover plate assembly (13).

19. The battery assembly method according to claim 18, wherein the second cover plate assembly (13) is substantially perpendicular to the plane where the second port (112) is located.

20. The battery assembly method according to any one of claims 12-17, wherein the step of connecting the first tab (22) of the cell (20) and the first cover plate assembly (12) comprises:
connecting the second connecting piece (40) to the first cover plate assembly (12); and
connecting the second connecting piece (40) and the first tab (22).

21. The battery assembly method according to claim 20, wherein the second connecting piece (40) is formed with a fusing portion (41).

22. The battery assembly method according to claim 21, wherein the first tab (22) is a positive tab, and the second tab (23) is a negative tab.

23. The battery assembly method according to claim 12, wherein the cell (20) is formed by a first cell and a second cell;
wherein the first connecting piece (30) is an integrated structure, and the first connecting piece (30) is connected to a tab portion of the first cell and a tab portion of the second cell; or
the first connecting piece (30) comprises a first split member (321) and a second split member (322), which are two independent members, the first split member (321) is connected to the tab portion of the first cell, the second split member (322) is connected to the tab portion of the second cell, and the first split member (321) is connected to the second split member (322).

24. A battery pack, comprising the battery according to any one of claims 1-11.
